# EUROPEAN PATENT APPLICATION

(11) **EP 1 195 125 A2**
(43) Date of publication of application: **10.04.2002**
(21) Application number: 01308409.0
(22) Date of filing: 02.10.2001
(51) Int. Cl.: A47L 9/16, A47L 9/12, A47L 5/28, B01D 50/00

(54) **Vacuum cleaner with 2-stage separation**

(30) Priority: 07.10.2000 GB 0024596
(71) Applicant: HOOVER LIMITED, Merthyr Tydfil, Mid Glamorgan CF48 1PQ (GB)
(72) Inventor: Taylor, John, Blantyre, Glasgow G72 9NL (GB)
(74) Representative: Evans, Huw David Duncan

(57) **Abstract**

A bagless vacuum cleaner comprises a cyclonic separator 14 arranged to deposit separated dirt and dust in a removable collection receptacle 13 and a filter 23 arranged over the removable collection receptacle 13. The upstream surface of the filter 23 is formed of a resiliently compressible material arranged to compress when there is an airflow between the inlet and outlet of the cleaner and to release any dust collected thereon when it recovers its shape upon cessation of the airflow.

The cyclonic separator 14 serves to remove a large proportion of the dirt and dust whilst any dirt and dust carried over to the next stage is separated by the filter 23. Upon cessation of the airflow, any dirt and dust collected on the filter falls into the collection receptacle 13, thereby avoiding the need to regularly clean the filter.

## Description

This invention relates to a vacuum cleaner having two stages of separation.

Vacuum cleaners having two stages of separation are well known. United States Patent number 2 133 141 discloses one such vacuum cleaner whereby the dirt removed from the surface being cleaned is separated from the airstream in two series-connected stages, comprising a low-efficiency cyclone as the first stage, followed by a filter bag configured to wrap around the handle of the cleaner. This separator system offered the advantage over conventional vacuum cleaners relying on just a filter bag for separating and collecting the dirt, that most of the dirt was removed from the airstream by the cyclone of the first stage. The dirt separated by the first stage is collected in a container which can be emptied relatively easily and it will be appreciated that the filter bag of the second stage only needs emptying occasionally, since most of the dirt is separated by the first stage.

United Kingdom patent number 0 568 242 also discloses vacuum cleaner having two stages of separation, in which a cylindrical cyclone is connected upstream of a cloth filter of cylindrical form which is enclosed within the cyclone chamber. In this cleaner, the electric motor driven fan is located downstream of the cyclone, drawing air from the suction nozzle through the cyclone, and exhausting it in a partly-cleaned state into the second stage filter. This vacuum cleaner also comprises a self-cleaning system, whereby the surface of the second-stage filter could be cleaned by diverting the suction airflow away from the cleaning nozzle and to a manually-actuated nozzle which can be moved over the surface of the filter, thereby removing the dirt therefrom. A disadvantage of this vacuum cleaner was its complexity and expense.

United States Patent number 6 026 540 discloses an upright vacuum cleaner having a two-stage separator, the first stage of which is a conventional cylindrical cyclone. The outlet of the cyclone takes the form of a filter unit formed of rigid, porous material. In one embodiment, the filter forms a core of the cyclone chamber, whereby air partly cleaned by the first stage is drawn into the filter, depositing residual fine dirt particles on its outer surface. An electrically-driven fan draws air from the interior of the filter by way of an axial duct, which depends into the upper region of the cyclone chamber, and which makes sealing contact with the upper extremity of the filter. A disadvantage of this arrangement is that the presence of the filter, forming a core of the cyclone chamber, places restrictions on the dirt capacity of the cyclone.

We have now devised a vacuum cleaner having two stages of separation which alleviates the above-mentioned problems.

In accordance with this invention there is provided a vacuum cleaner comprising first and second stages connected in series between an inlet and outlet of the cleaner, the first stage comprising a cyclonic separator arranged to deposit separated dirt and dust in a removable collection receptacle, the second stage comprising a filter arranged over said removable collection receptacle, such that in use, residual dirt and dust collected on the filter can fall into the collection receptacle.

The cyclonic separator serves to remove a large proportion of the dirt and dust whilst and dirt and dust carried over to the next stage is separated by the filter. Any residual dirt and dust collected on the filter falls into the collection receptacle, thereby avoiding the need to regularly clean the filter.

Preferably, the cyclonic separator is mounted between the filter and the removable collection receptacle, a passageway extending along the axis of the cyclonic separator between the filter and the removable collection receptacle.

Preferably, the passageway provides and outlet for air flowing from the cyclonic separator to the filter.

Preferably, the removable collection receptacle comprises first and second portions arranged to receive dirt and dust from the first and second stages respectively.

Preferably, the filter is tubular and is arranged such that the airflow flows radially out from an axially-extending central passage of the filter.

Preferably, the axis of the filter coextends with the axis of the cyclonic separator and the passageway.

Preferably, the upstream surface of the filter is formed of a resiliently compressible material which is arranged to compress when there is an airflow between said inlet and outlet of the cleaner and which is arranged to release dust collected thereon when it recovers its shape upon cessation of the airflow.

An embodiment of this invention will now be described by way of example only and with reference to the accompanying drawings, in which:
Figure 1 is a perspective view of an embodiment of an upright vacuum cleaner in accordance with this invention;
Figure 2 is a sectional view along the line II-II of Figure 1; and
Figure 3 is a sectional view along the line III-III of Figure 2.

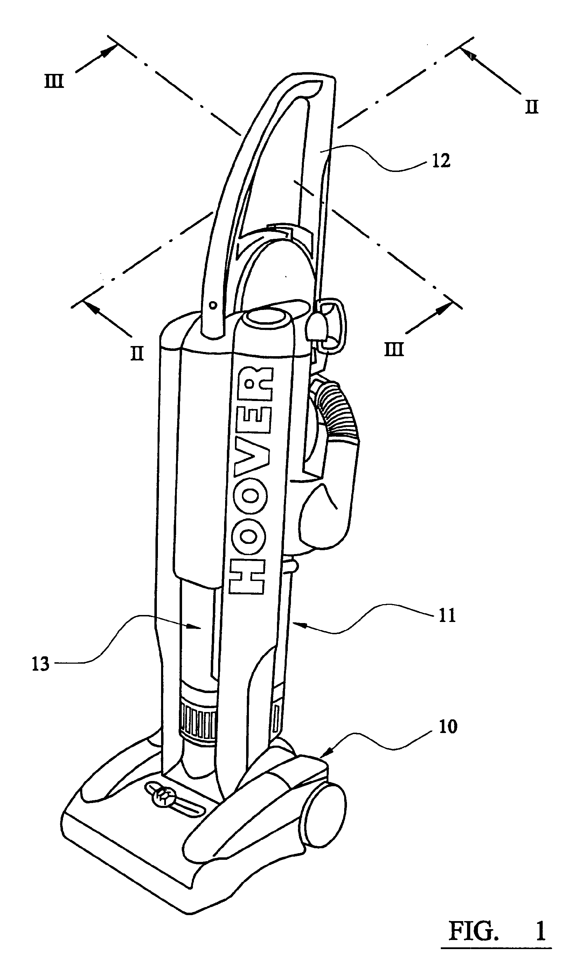

Referring to Figure 1 of the drawings, there is shown an upright vacuum cleaner comprising a floor-engaging portion 10 incorporating a suction nozzle and a motor-driven rotating brush in the conventional manner. The floor-engaging portion 10 is pivotally connected to an upper body portion 11 having a handle 12. The upper body portion 11 encloses a motor/fan unit and a two-stage dust separation apparatus, which is arrange to deposit dirt and dust in a removable dirt receptacle 13.

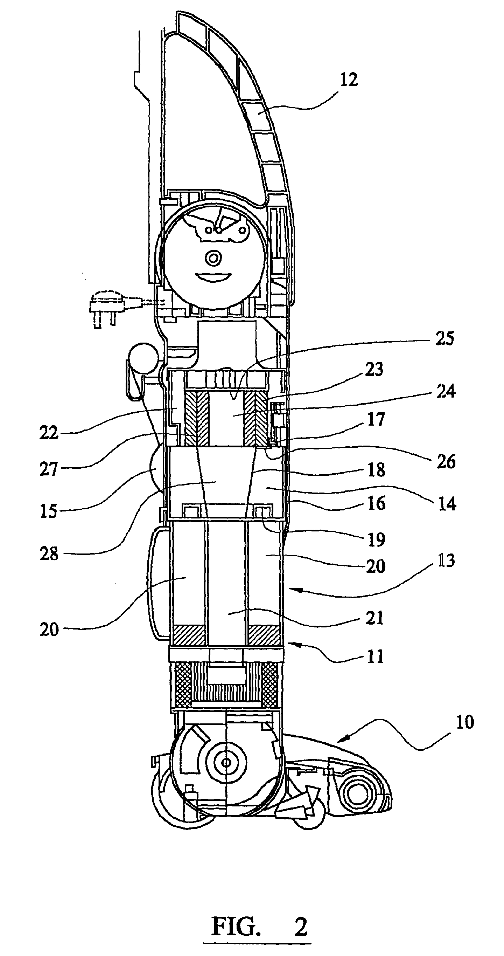

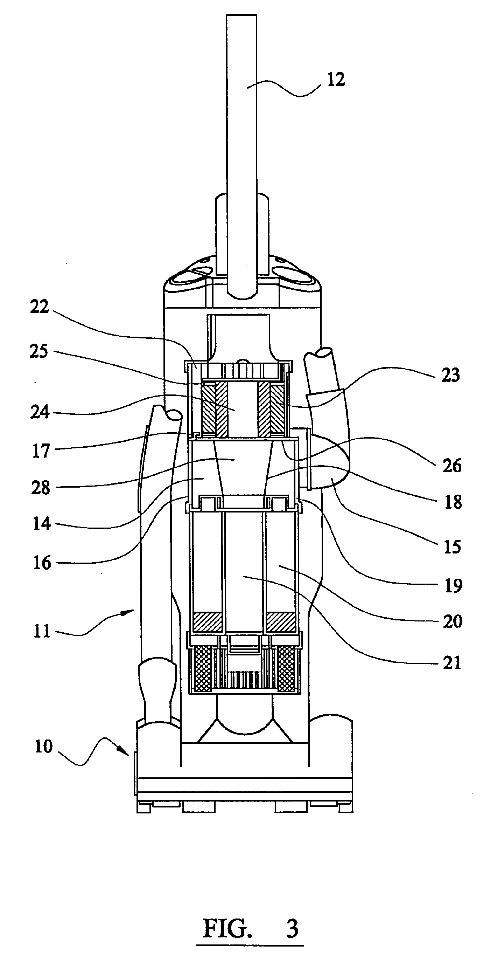

Referring to Figures 2 and 3 of the drawings, the two-stage dust separation apparatus incorporates a cylindrical cyclone unit 14 having a tangential dirty air inlet 15 from the suction nozzle. The cyclone unit 14 has a cylindrical wall 16, connected at its lower end to a co-extending cylindrical wall of the removable dirt receptacle 13.

The cyclone unit 14 is closed at its upper end by an annular lip 17 projecting radially inwardly from the chamber wall 16. A frusto-conical perforated outlet screen 18 comprises a radially projecting flange 26 at its widest end, which is detachably connected to the inner edge of the annular lip 17 eg by means of a bayonet-type fixing. The outlet screen 18 depends axially into the chamber of the cyclone unit 14 and is provided at its lower end with a radially-projecting baffle 19 which separates the cyclone chamber from the dirt receptacle 13. An annular gap between the outer edge of the baffle 19 and the wall 16 of the cyclone unit 14 allows the dirt and dust separated in the cyclone unit 14 to pass into an outer collection chamber 20 of the dirt receptacle 13.

The lower end of the outlet screen 18 has a central aperture which sealingly communicates with an inner collection chamber 21 of the dirt receptacle 13.

An upward extension of the cyclone chamber wall 16, forms a cylindrical chamber 22 in which a cylindrical tubular pleated filter 23 is mounted. The axis of the filter 23 coextends with the axis of the cyclone unit 14 and the filter 23 is held in place inside the chamber 22 by radially projecting ribs (not shown) on the wall of the chamber 22.

The central passage 24 of the filter 23 is closed at its upper end by a disc 25. The lower end of filter 23 is supported on the annular flange 26 formed at the upper end of the outlet screen 18. The wall of the central passage 24 of the filter 23 is formed by a removable foam tube 27, which protects of the filter medium against damage by hard or sharp dirt particles. The pleated material of the filter is washable and is of the S-class high efficiency type.

The filter chamber 22 is evacuated by the motor/fan unit to cause air to be drawn through head 10 of the cleaner. Dirt and dust particles are entrained in the airflow which enters the cyclone unit 14 through the tangential inlet 15, whereupon the majority of particles are deposited against the wall of the unit 14, owing to the centrifugal force acting on the particles as they swirl around in the cyclone chamber. The deposited dirt and dust particles move downwardly along the wall 16 of the unit 14 in a swirling manner until they reach the baffle 19, whereupon the enter the receptacle 13.

The airflow then leaves the cyclone chamber by passing radially inwardly through the perforations of the outlet screen 18, the interior space of which is in direct fluid communication with the interior passage 24 of the filter 23. The air then passes radially outwardly through the filter medium 23 to the filter chamber 22 and is then exhausted to atmosphere through the motor/fan unit.

Any residual fine dirt particles not removed from the airstream by the cyclone unit 14 are retained on the inside wall of the passage 24 of the filter 23. It will be appreciated that fine dirt accumulating on the inside of the filter can become dislodged and will fall under gravity through the interior space of the outlet screen 18 into the interior compartment 21 of the dirt receptacle 13.

Periodic emptying of the cleaner is effected by removing the dirt receptacle 13 from the cleaner, tipping its contents to waste, and replacing the container 13 on the cleaner. Occasionally, after an extended period of use during which the dirt receptacle would probably be emptied a considerable number of times, the filter 23 can be removed from the cleaner and washed in warm water, and refitted to the cleaner. This is accomplished by removing the dirt receptacle 13, grasping the baffle 19 on the screen 18 and rotating it to disengage the bayonet coupling between the lip 17 and flange 26 . The screen 18 is then removed from the cleaner together with the filter 23 which is supported on the flange 26. The screen 18 can be brushed clean, and the filter 23 washed in warm water before it is dried and replaced.

## Claims

1. A vacuum cleaner comprising first and second stages connected in series between an inlet and outlet of the cleaner, the first stage comprising a cyclonic separator arranged to deposit separated dirt and dust in a removable collection receptacle, the second stage comprising a filter arranged over said removable collection receptacle, such that in use, residual dirt and dust collected on the filter can fall into the collection receptacle.

2. A vacuum cleaner as claimed in claim 1, in which the cyclonic separator is mounted between the filter and the removable collection receptacle, a passageway extending along the axis of the cyclonic separator between the filter and the removable collection receptacle.

3. A vacuum cleaner as claimed in claim 2, in which the passageway provides and outlet for air flowing from the cyclonic separator to the filter.

4. A vacuum cleaner as claimed in claim 3, in which the filter is tubular and is arranged such that the airflow flows radially out from the axially-extending central passage of the filter.

5. A vacuum cleaner as claimed in claim 4, in which the axis of the tubular filter coextends with the axis of the cyclonic separator and the passageway.

6. A vacuum cleaner as claimed in any preceding claim, in which the removable collection receptacle comprises first and second portions arranged to receive dirt and dust from the first and second stages respectively.

7. A vacuum cleaner as claimed in any preceding claim, in which the upstream surface of the filter is formed of a resiliently compressible material arranged to compress when there is an airflow between said inlet and outlet of the cleaner and arranged to release dust collected thereon when it recovers its shape upon cessation of the airflow.
